# EUROPEAN PATENT SPECIFICATION

(11) **EP 3 091 805 B1**
(45) Date of publication and mention of the grant of the patent: **13.03.2019**
(21) Application number: 14879543.8
(22) Date of filing: 24.01.2014
(51) Int. Cl.: H04W 4/00, H04W 72/04

(54) **RESOURCE INDICATION METHOD, AND APPARATUS**
RESSOURCENANZEIGEVERFAHREN, UND VORRICHTUNG
PROCÉDÉ, ET APPAREIL D'INDICATION DE RESSOURCES

(43) Date of publication of application: 09.11.2016
(73) Proprietor: Huawei Technologies Co., Ltd., Longgang District Shenzhen, Guangdong 518129 (CN)
(72) Inventor: ZHANG, Xingwei, Shenzhen Guangdong 518129 (CN); LI, Qiang, Shenzhen Guangdong 518129 (CN); MA, Sha, Shenzhen Guangdong 518129 (CN)
(74) Representative: Körber, Martin Hans
(86) International application number: PCT/CN2014/071414
(87) International publication number: WO 2015/109543

(56) References cited:
- WO-A1-2013/133576
- CN-A- 103 428 679
- CN-A- 103 517 371
- US-A1- 2012 134 344
- US-A1- 2013 223 356
- US-A1- 2013 322 413
- US-A1- 2014 010 099
- US-A1- 2014 023 008
- CATT: "D2D Broadcast communication", 3GPP DRAFT; R1-133031, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716260, Retrieved from the Internet: URL:http://www.3gpp.org/ftp/tsg_ran/WG1_RL 1/TSGR1_74/Docs/ [retrieved on 2013-08-10]
- GÃ BOR FODOR ET AL: "Design aspects of network assisted device-to-device communications", IEEE COMMUNICATIONS MAGAZINE, IEEE SERVICE CENTER, PISCATAWAY, US, vol. 50, no. 3, 1 March 2012 (2012-03-01), pages 170-177, XP011429640, ISSN: 0163-6804, DOI: 10.1109/MCOM.2012.6163598

## Description

### TECHNICAL FIELD

The present invention relates to the communications field, and in particular, to a resource indication method, an apparatus, and a system.

### BACKGROUND

Currently, a resource indication method is generally applied to a resource scheduling process, where the resource indication method is specifically: sending, by a base station, control signaling to a terminal, so that the terminal learns a resource location according to the control signaling. In a process of scheduling an uplink resource, the terminal sends data at the resource location, and in a process of scheduling a downlink resource, the terminal receives data at the resource location. In the process of scheduling an uplink resource, because the base station knows the resource location, only the terminal needs to be informed of the resource location.

As a service of an excessively high rate (for example, a high-definition video) emerges, load of a wireless communications network is increasingly heavy. To improve a data rate and system performance, a concept of a D2D (Device to Device, device to device) communications system is proposed. In the D2D communications system, one terminal may communicate with another terminal without requiring data forwarding by using a base station, where both the terminals performing communication need to learn a resource location. According to a resource indication method in the prior art, a terminal that sends data on an uplink by scheduling an uplink resource may learn a resource location used to send the data. However, a terminal that receives data on a downlink cannot learn a resource location used to receive the data. To resolve the problem, extra control signaling may be used to notify the terminal that receives the data on the downlink, of a resource location at which the data is to be received, which certainly increases overhead of the control signaling.

US2013/0322413 A1 discloses a master-slave example, where one WTRU is a master as a D2D master, and may perform the resource arbitration and thus determine when each D2D WTRU within a D2D link (such as including the D2D master and one or more D2D slaves) has access to the resource for transmission. The document addresses resource allocation for D2D with indication of direction (whether to receive or transmit), by eNB or terminal, master D2D. WTRUs participating in a D2D session may be assigned with a D2D-RNTI. WTRUs participating in a session may be assigned with an identity that corresponds to a master, slave, receiver and/or transmitter role in the D2D session. Combinations thereof are also possible. A WTRU may be assigned with a plurality of identities.

US 2013/223356 A1 discloses a method for allocating resources for a D2D link between UEs. The eNB also allocates resources for a D2D link by using at least one PDCCH. The eNB also indicates a D2D link direction. One PDCCH may sent for one or more transmitting UEs and one or more receiving UEs. The direction of D2D link may be dynamically switched based on a PDCCH. In some configurations, if a UE detects it own RNTI, the UE may determine itself to be a transmitting UE. Otherwise, the UE may determine itself to be a receiving UE.

US 2014/023008 A1, US 2014/010099 A1 and US 2012/0134344 A1 disclose similar methods as US 2013/223356 A1.

### SUMMARY

Embodiments of the present invention provide a resource indication method, and an apparatus, so as to reduce overhead of control signaling. The subject matter of the invention is defined by the appended claims.

According to the resource indication method, and the apparatus provided in the embodiments of the present invention, a first node receives control signaling including an indication identifier and resource indication information, and determines, according to the indication identifier and a cluster identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solutions can reduce overhead of the control signaling.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a resource indication method according to Embodiment 1 of the present invention;
FIG. 2 is a schematic flowchart of a resource indication method according to Example 2 of the present invention;
FIG. 3 is a schematic flowchart of a resource indication method according to Example 1' of the present invention;
FIG. 3a is a schematic diagram of an application scenario according to Example 1' of the present invention;
FIG. 4 is a schematic flowchart of a resource indication method according to Example 2' of the present invention;
FIG. 4a is a schematic diagram of an application scenario according to Example 2' of the present invention;
FIG. 5 is a schematic diagram of a structure of a node according to Embodiment 3 of the present invention;
FIG. 6 is a schematic diagram of a structure of another node according to Embodiment 3 of the present invention;
FIG. 7 is a schematic diagram of a structure of a node according to Embodiment 4 of the present invention;
FIG. 8 is a schematic diagram of a structure of a node according to Example 5 of the present invention;
FIG. 9 is a schematic diagram of a structure of another node according to Example 5 of the present invention; and
FIG. 10 is a schematic diagram of a structure of a node according to Example 6 of the present invention.

### DESCRIPTION

The following clearly and completely describes the technical solutions in the embodiments and examples of the present invention with reference to the accompanying drawings in the embodiments and examples of the present invention.

A D2D communications system is constituted of multiple nodes, where a set constituted of the multiple nodes is a cluster, and a node included in the cluster may be referred to as a cluster member. One or more nodes in the cluster may be used as a cluster head, and are used to provide a function similar to that of a base station, for example, allocating, to the cluster member, a resource used to send data, and providing time synchronization required for data transmission. It should be noted that although one cluster may include multiple cluster heads, in general, only one cluster head may be used to allocate a resource to the cluster member. A "cluster head" mentioned below refers to a cluster head used to allocate a resource to a cluster member.

In a scenario in which there is network coverage, the nodes in the D2D communications system generally include a base station and a terminal; in the scenario, the base station is generally used as a cluster head, and certainly, the terminal may also be used as the cluster head. In a scenario in which there is no network coverage, the nodes in the D2D communications system may include only terminals. The terminals in the D2D communications system are generally multiple terminals in a same area or multiple terminals of a same service type. It should be noted that in the scenario in which there is network coverage, the nodes in the D2D communications system may also include only terminals.

In addition, the term "and/or" in the specification describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

### Embodiment 1

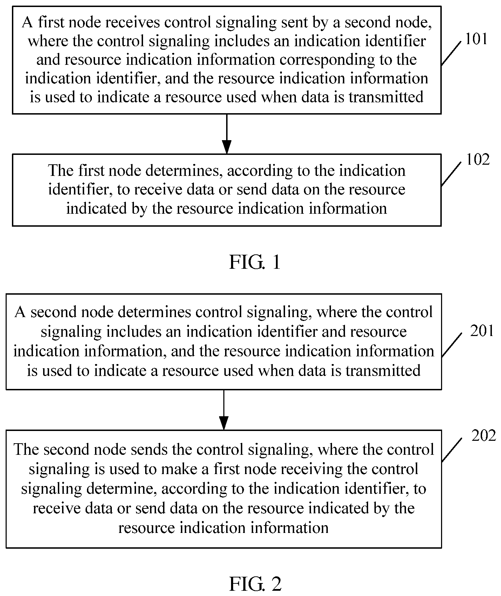

In this embodiment, a resource indication method provided in this embodiment of the present invention is described in terms of a node receiving control signaling (that is, a "first node"), where the method is applied to a device-to-device D2D communications system, and the D2D communications system includes at least one first node and one second node. As shown in FIG. 1, the method includes:
101. The first node receives control signaling sent by the second node, where the control signaling includes an indication identifier and resource indication information corresponding to the indication identifier, and the resource indication information is used to indicate a resource used when data is transmitted.

The "first node" may be any node in the D2D communications system. Specifically, in a scenario in which there is network coverage, the "first node" may be a base station or a terminal; in a scenario in which there is no network coverage, the "first node" is a terminal. The resource indicated by the resource indication information may be specifically a time-frequency resource, and a resource location of the time-frequency resource.

The "second node" may be a cluster head of a cluster in which the "first node" in step 101 is located. Specifically, in the scenario in which there is network coverage, the "second node" may be a base station, and certainly, may also be a terminal; in the scenario in which there is no network coverage, the "second node" is a terminal.

The first node and the second node may be in a same cluster. When the second node is a cluster head, the second node directly sends the control signaling to the first node. When the second node is not a cluster head, the second node may forward the control signaling sent by the cluster head.

The "indication identifier" included in the "control signaling" is used to make the first node receiving the control signaling determine that the first node should receive data or send data on the resource indicated by the resource indication information. Specifically, the "indication identifier" may be an identifier of a first node, or may be an identifier of the second node.

Optionally, the indication identifier may include but is not limited to one of the following several pieces of information: the indication identifier being a temporary ID (Identity, identity) of a device in the cluster, the indication identifier being a D2D ID of the device, the indication identifier being a temporary cell ID of the device, the indication identifier being an IMSI (International Mobile Subscriber Identification Number, international mobile subscriber identification number) of the device, the indication identifier being an IME (International Mobile Equipment Identity, international mobile equipment identity) of the device, and the indication identifier being a SIM (Subscriber Identity Module, subscriber identity module) number of the device. It should be noted that in addition to the several pieces of information listed above, in specific implementation, the indication identifier may also be another symbol or user-defined identifier used to identify a node in the prior art.

The "resource indication information" is used to indicate the resource used when data is transmitted. Optionally, the resource indication information includes: information indicating a frequency domain position in which the resource is located, and/or information indicating a time domain position in which the resource is located. The resource indication information may specifically include: information indicating a relative frequency domain position of the resource in a resource pool, and/or information of a relative time domain position. The resource pool is constituted of a resource that can be allocated by the second node to the first node. The resource indication information may further specifically include: information indicating an absolute frequency domain position of the resource, and/or information of an absolute time domain position. For example, the resource pool may be system bandwidth of the entire D2D communications system. When the second node is the cluster head, the second node can allocate, to the first node, a resource that is from the resource pool and ensures that the first node initiates a communications service. When the second node is not the cluster head, the second node may forward a resource that is allocated by the cluster head and that is to be used by the first node to initiate the communications service.

The "resource indication information" may be specifically used to indicate a location of a resource that is allocated by the second node to the first node, where the resource allocated by the second node to the first node refers to a resource scheduled by the second node in the resource pool. An implementation method in which the second node obtains the resource pool is not limited in this embodiment of the present invention. For example, the resource pool may be allocated by the base station, or may be obtained by the second node by means of contention. In addition, an implementation manner in which the second node uses which resource as the resource allocated to the first node is not limited in this embodiment of the present invention.

Optionally, a step in which the "first node" obtains the "resource pool" may be executed before or after step 101. In addition, a method in which the "first node" in step 101 obtains the "resource pool" includes but is not limited to the following three manners:
(i) The first node receives a system message sent by the second node, where the system message includes information used to indicate the resource pool. The system message is used to notify some specific parameters in the system and is shared by all nodes in the system, and the system message is periodically sent.
(ii) The first node receives a broadcast message sent by the second node, where the broadcast message includes information used to indicate the resource pool. That the first node receives the broadcast message sent by the second node specifically includes: receiving, in a physical broadcast channel, the broadcast message sent by the second node, where the broadcast message includes the information used to indicate the resource pool.
(iii) The first node receives semi-static signaling sent by the second node, where the semi-static signaling includes information used to indicate the resource pool. The semi-static signaling may be: RRC (Radio Resource Control, Radio Resource Control) signaling, a MAC CE (MAC control element, Medium Access Control Medium Access Control, Control Element control element), or the like.

That "the first node receives control signaling sent by the second node" may be: the first node receives the control signaling sent by the second node in a broadcast/multicast/unicast manner. There may be one or more first nodes that receive same control signaling sent by the second node. When there is only one first node that receives the same control signaling, the second node sends the control signaling in the unicast manner; when there are at least two first nodes that receive the same control signaling, the second node sends the control signaling in the broadcast/multicast manner. Further, in the latter case, when the first nodes that receive the same control signaling are first nodes within a range, the second node sends the control signaling in the broadcast manner; when the first nodes that receive the same control signaling are first nodes with a same characteristic (for example, belonging to a same cluster) within a range, the second node sends the control signaling in the multicast manner.

Optionally, step 101 may include: receiving, by the first node, in common search space of a physical control channel, the control signaling sent by the second node.

102. The first node determines, according to the indication identifier, to receive data or send data on the resource indicated by the resource indication information.

In an embodiment of the present invention, step 102 may include: determining whether the indication identifier is the same as an identifier of the first node; and when the indication identifier is different from the identifier of the first node, determining to receive data on the resource indicated by the resource indication information.

In another embodiment of the present invention, step 102 may include: determining whether the indication identifier is the same as an identifier of the first node; and when the indication identifier is the same as the identifier of the first node, determining to send data on the resource indicated by the resource indication information.

The control signaling may further include a cluster identifier of a cluster in which the second node is located; in this case, step 102 may include: determining, by the first node according to the cluster identifier and the indication identifier, to receive data or send data on the resource indicated by the resource indication information. It should be noted that a cluster member stores a cluster identifier of a cluster in which the cluster member is located, and specifically, when joining a cluster, a node may store a cluster identifier of the cluster.

Exemplarily, step 102 may be specifically: when a cluster identifier in the control signaling is the same as a cluster identifier of the cluster in which the first node is located, determining, by the first node according to the indication identifier, to receive data or send data on the resource indicated by the resource indication information. It should be noted that when the cluster identifier in the control signaling is different from the cluster identifier of the cluster in which the first node is located, the first node cannot obtain the control signaling by parsing, and therefore the first node cannot obtain a resource allocated by the second node. This optional manner may prevent a first node that does not belong to a cluster corresponding to the cluster identifier in the control signaling from acquiring the resource allocated by the second node, thereby improving security assurance.

In an example of the present invention, before step 101, the method may further include: sending, by the first node, a resource scheduling request message to the second node, where the resource scheduling request message is used to make the second node send the control signaling.

Exemplarily, when any cluster member except a cluster head in a cluster has a requirement for data sending, the cluster member sends a resource scheduling request message to the second node (when it is assumed that the second node is the cluster head). The resource scheduling request message may include an indication identifier, where the indication identifier is an identifier of the cluster member, so that the second node determines control signaling according to the indication identifier.

In addition, the second node may also obtain the indication identifier in the following manner: the second node may pre-allocate, to each first node, a resource block used to send a resource scheduling request message, and store a correspondence between each first node and the resource block that is allocated to the first node and that is used to send a resource scheduling request message. In this way, when one of the first nodes sends a resource scheduling request message by using the resource block that is allocated to the first node and that is used to send the resource scheduling request message, the second node may acquire an identifier of the first node according to the correspondence between the first node and the resource block that is used to send the resource scheduling request message, and use the identifier as the indication identifier.

According to the resource indication method provided in this embodiment of the present invention, a first node receives control signaling including an indication identifier and resource indication information, and determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information, which implements resource scheduling of a cluster member in a same cluster using only one piece of control. Compared with the prior art in which extra control signaling is used to enable different first nodes to learn a resource location, the solution can reduce overhead of the control signaling.

### Example 2

In this example, a resource indication method provided in this example is described in terms of a node sending control signaling (that is, a "second node"), where the method is applied to a device-to-device D2D communications system, and the D2D communications system includes at least one first node and one second node. As shown in FIG. 2, the method includes:
201. The second node determines control signaling, where the control signaling includes an indication identifier and resource indication information, and the resource indication information is used to indicate a resource used when data is transmitted.

Optionally, the "indication identifier" may include but is not limited to one of the following several pieces of information: the indication identifier being a temporary ID of a device in a cluster, the indication identifier being a D2D ID of the device, the indication identifier being a temporary cell ID of the device, the indication identifier being an IMSI of the device, the indication identifier being an IME of the device, and the indication identifier being a SIM number of the device. In addition, the indication identifier may also be another symbol or user-defined identifier used to identify a node in the prior art.

The "resource indication information" is used to indicate the resource used when data is transmitted. Optionally, the resource indication information includes: information indicating a frequency domain position in which the resource is located, and/or information indicating a time domain position in which the resource is located. The resource indication information may specifically include: information indicating a relative frequency domain position of the resource in a resource pool, and/or information of a relative time domain position. The resource pool is constituted of a resource that can be allocated by the second node to the first node. The resource indication information may further specifically include: information indicating an absolute frequency domain position of the resource, and/or information of an absolute time domain position.

The "resource indication information" may be specifically used to indicate a location of a resource that is allocated by the second node to the first node, where the resource allocated by the second node to the first node refers to a resource scheduled by the second node in the resource pool. An implementation method in which the second node obtains the resource pool is not limited in this example. For example, the resource pool may be allocated by the base station, or may be obtained by the second node by means of contention. In addition, an implementation manner in which the second node uses which resource as a resource allocated by the first node is not limited in this example.

Optionally, a method in which a "first node receiving the control signaling" obtains the "resource pool" includes but is not limited to the following three manners: (i) sending a system message to the first node receiving the control signaling, where the system message includes information used to indicate the resource pool; (iii) sending a broadcast message to the first node receiving the control signaling, where the broadcast message includes information used to indicate the resource pool; or sending semi-static signaling to the first node receiving the control signaling, where the semi-static signaling includes information used to indicate the resource pool. A step in which the first node obtains the "resource pool" may be executed before or after step 201.

202. The second node sends the control signaling, where the control signaling is used to make a first node receiving the control signaling determine, according to the indication identifier, to receive data or send data on the resource indicated by the resource indication information.

Optionally, step 202 may include: sending, by the second node, the control signaling in common search space of a physical control channel.

In an example, before step 201, the method may further include: receiving, by the second node, a resource scheduling request message sent by a first node, where the resource scheduling request message is used to make the second node send the control signaling.

Exemplarily, the resource scheduling request message may include an indication identifier, and in this case, the indication identifier is an identifier of the first node, so that the second node determines control signaling according to the indication identifier. In addition, the second node may also obtain the indication identifier in the following manner: the second node may pre-allocate, to each first node, a resource block used to send a resource scheduling request message, and store a correspondence between each first node and the resource block that is allocated to the first node and that is used to send a resource scheduling request message. In this way, when one of the first nodes sends a resource scheduling request message by using the resource block that is allocated to the first node and that is used to send the resource scheduling request message, the second node may acquire an identifier of the first node according to the correspondence between the first node and the resource block that is used to send the resource scheduling request message, and use the identifier as the indication identifier.

Optionally, the control signaling further includes a cluster identifier of a cluster in which the second node is located, and the cluster identifier is used to make a first node that is in the cluster corresponding to the cluster identifier and that receives the control signaling determine, according to the indication identifier, to receive data or send data on the resource indicated by the resource indication information.

It should be noted that for both a related explanation and example in this example, reference may be made to Embodiment 1 and the following specific embodiments.

According to the resource indication method provided in this example, a second node determines and sends control signaling including an indication identifier and resource indication information, so that a first node receiving the control signaling determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

The following exemplarily illustrates, by using several specific embodiments, the methods provided in the foregoing Embodiment 1 and Example 2. When the following specific embodiments and examples are applied to a scenario in which there is network coverage, the embodiments and examples are described by using an example in which nodes in a D2D communications system generally include a base station and a terminal. In addition, for related explanations and examples in the following specific embodiments, reference may be made to related parts in the foregoing Embodiment 1 and Example 2.

### Example 1'

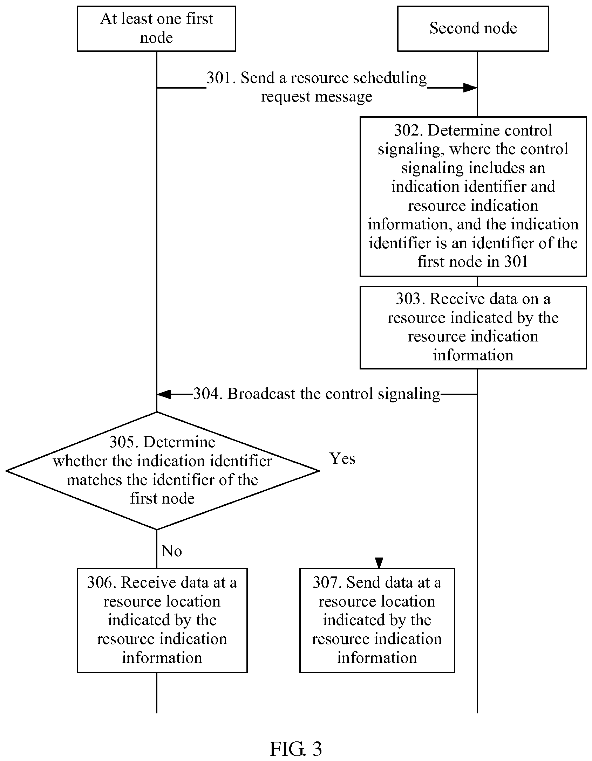

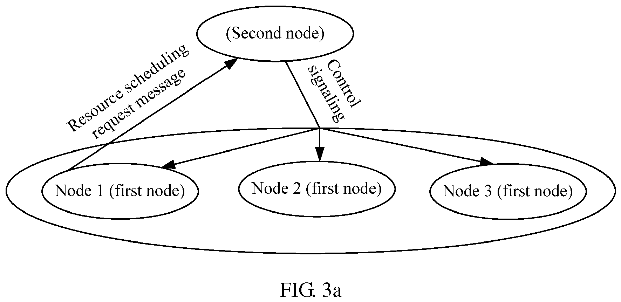

In this example, an "indication identifier" is an identifier of a first node. As shown in FIG. 3, a resource indication method provided in this example includes:
301. The first node sends a resource scheduling request message to a second node, where the resource scheduling request message includes the identifier of the first node.
302. The second node determines control signaling, where the control signaling includes an indication identifier and resource indication information, the indication identifier is the identifier of the first node in step 301, and resource scheduling indication information is used to indicate a resource used when data is transmitted.

Optionally, the resource indication information specifically includes the following three cases:
(1) The resource indication information is information indicating a frequency domain position in which the resource is located. Specifically, a location of the frequency domain in which the resource is located is indicated in RB (Resource Block, resource block) or RBG (Resource Block Group, resource block group) units from a frequency domain perspective, where an indication type may be: a bitmap (bitmap) of an RB/RBG or three resource indication types (Type 0/1/2) defined in an existing LTE (Long Term Evolution) system.
   It should be noted that in this case, a first node receiving the control signaling may receive data or send data in a specific preset subframe from a time domain perspective. For example, the first node receives the control signaling in the N^{th} subframe, and may receive data or send data in the (N+k)^{th} subframe, where a value of k is not limited in this example. Optionally, for FDD (Frequency Division Duplexing, frequency division duplex), k=4; for TDD (Time Division Duplexing, time division duplex), k=4, 5, 6, or 7.
(2) The resource indication information is information indicating a time domain position in which the resource is located. Specifically, a location of the time domain position in which the resource is located is indicated in subframe units from a time domain perspective, where the location of the time domain in which the resource is located may be indicated by using a bitmap method. For example, the location of the time domain in which the resource is located may be indicated by using a map of 10 bits "1000011001", where the map indicates that the location of the time domain in which the resource is located is a subframe numbered #0, #5, #6, or #9.
   It should be noted that in this case, the first node receiving the control signaling may receive data or send data in a specific preset RB or RBG or in full bandwidth.
(3) The resource indication information is information indicating a frequency domain position in which the resource is located and information indicating a time domain position in which the resource is located. Specifically, a location of the frequency domain in which the resource is located is indicated in RB or RBG units from a frequency domain perspective, where an indication type may be: a bitmap of the RB/RBG or three resource indication types (Type 0/1/2) defined in an existing LTE system. A location of the time domain in which the resource is located is indicated in subframe units from a time domain perspective, where a bitmap of a subframe may be indicated, or a period is indicated. The location of the time domain in which the resource is located is indicated by using a period T. If a first node receives control signaling in the N^{th} subframe, the first node may receive data or send data in the (N+kT)^{th} subframe, where k=1, 2, 3, ....

303. The second node receives data on the resource indicated by the resource indication information.

304. The second node broadcasts the control signaling.

305. A first node receiving the control signaling determines whether the indication identifier is the same as an identifier of the first node.

If the indication identifier is different from the identifier of the first node, step 306 is executed; if the indication identifier is the same as the identifier of the first node, step 307 is executed.

306. Receive data at a resource location indicated by the resource indication information.

307. Send data at a resource location indicated by the resource indication information.

Exemplarily, it is assumed that a D2D communications system includes three first nodes and one second node, where the three first nodes are respectively: a node 1, a node 2, and a node 3, and the "first node" in step 301 is the node 1. FIG. 3a is a schematic diagram of information exchange in the scenario in which this example is applied.

According to the resource indication method provided in this example, a second node determines and sends control signaling including an indication identifier and resource indication information, so that a first node receiving the control signaling determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Example 2'

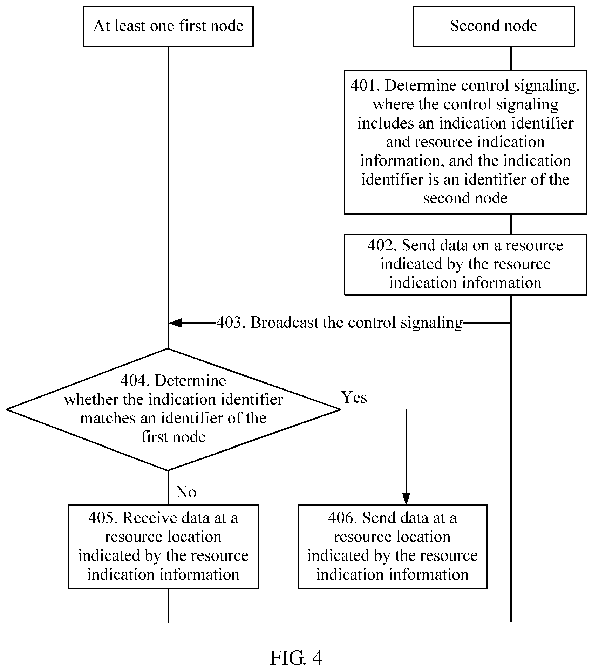

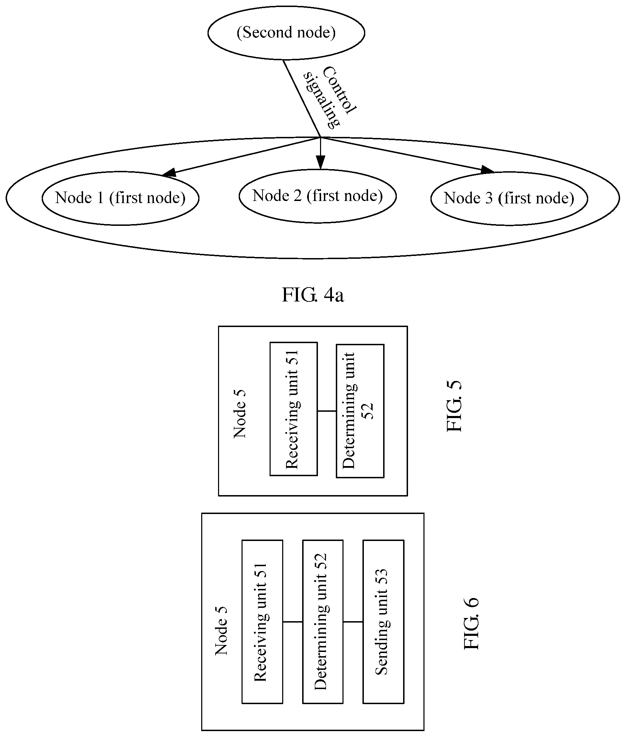

In this example, an indication identifier is an identifier of a "second node". As shown in FIG. 4, a resource indication method provided in this example includes:
401. The second node determines control signaling, where the control signaling includes an indication identifier and resource indication information, the indication identifier is the identifier of the second node, and resource scheduling indication information is used to indicate a resource used when data is transmitted.

Exemplarily, for a specific representation manner and application of the resource indication information, reference may be made to step 302 in the foregoing Example 1', and details are not described herein again.

402. The second node sends data on the resource indicated by the resource indication information.

Optionally, step 402 may be executed in any step after step 401.

403. The second node broadcasts the control signaling.

404. A first node receiving the control signaling determines whether the indication identifier is the same as an identifier of the first node.

If the indication identifier is different from the identifier of the first node, step 405 is executed; if the indication identifier is the same as the identifier of the first node, step 406 is executed.

It should be noted that in a scenario of this example, because the indication identifier is the identifier of the second node, and the second node and the first node are different nodes, a determining result in step 404 is generally that the indication identifier is different from the identifier of the first node.

405. Receive data at a resource location indicated by the resource indication information.

406. Send data at a resource location indicated by the resource indication information.

Exemplarily, it is assumed that a D2D communications system includes three first nodes and one second node, where the three first nodes are respectively: a node 1, a node 2, and a node 3, and the "first node" in step 404 is the node 1. FIG. 4a is a schematic diagram of information exchange in the scenario in which this example is applied.

According to the resource indication method provided in this example, a second node determines and sends control signaling including an indication identifier and resource indication information, so that a first node receiving the control signaling determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Embodiment 3

As shown in FIG. 5, a node 5 is provided in this embodiment of the present invention, and is applied to a device-to-device D2D communications system, where the D2D communications system further includes at least a second node. The node is used to execute the resource indication method shown in FIG. 1. The node 5 includes:
a receiving unit 51, configured to receive control signaling sent by the second node, where the control signaling includes an indication identifier and resource indication information corresponding to the indication identifier, and the resource indication information is used to indicate a resource used when data is transmitted; and
a determining unit 52, configured to determine, according to the indication identifier, to receive data or send data on the resource indicated by the resource indication information.

Optionally, the determining unit 52 is specifically configured to: determine whether the indication identifier is the same as an identifier of the node 5; and when the indication identifier is different from the identifier of the node 5, determine to receive data on the resource indicated by the resource indication information.

Optionally, the determining unit 52 is specifically configured to: determine whether the indication identifier is the same as an identifier of the node 5; and when the indication identifier is the same as the identifier of the node 5, determine to send data on the resource indicated by the resource indication information.

Optionally, as shown in FIG. 6, the node 5 further includes:
a sending unit 53, configured to send a resource scheduling request message to the second node, where the resource scheduling request message is used to make the second node send the control signaling to the node 5.

The control signaling further includes a cluster identifier of a cluster in which the node 5 is located; and
the determining unit 52 is specifically configured to determine, according to the cluster identifier and the indication identifier, to receive data or send data on the resource indicated by the resource indication information.

Optionally, the indication identifier includes one of the following pieces of information: the indication identifier being a temporary identity ID of a device in the cluster, the indication identifier being a D2D ID of the device, the indication identifier being a temporary cell ID of the device, the indication identifier being an international mobile subscriber identification number IMSI of the device, the indication identifier being an international mobile equipment identity IME of the device, and the indication identifier being a subscriber identity module SIM number of the device.

The resource indication information includes: information indicating a frequency domain position in which the resource is located, and/or information indicating a time domain position in which the resource is located.

Optionally, the information indicating the frequency domain position in which the resource is located includes: information indicating a relative frequency domain position of the resource in a resource pool; and/or the information indicating the time domain position in which the resource is located includes: information indicating a relative time domain position of the resource in the resource pool; where the resource pool is constituted of a resource that can be allocated by the second node to the node 5.

Optionally, the receiving unit 51 is further configured to:
receive a system message sent by the second node, where the system message includes information used to indicate the resource pool; or receive a broadcast message sent by the second node, where the broadcast message includes information used to indicate the resource pool; or receive semi-static signaling sent by the second node, where the semi-static signaling includes information used to indicate the resource pool.

Optionally, the receiving unit 51 is specifically configured to receive, in common search space of a physical control channel, the control signaling sent by the second node.

Exemplarily, the node 5 in this embodiment may be the "first node" described in the foregoing embodiment. In a scenario in which there is network coverage, the node 5 may be a base station or a terminal; in a scenario in which there is no network coverage, the node 5 may be a terminal. In addition, an "indication message" may be an identifier of the node 5, or may be an identifier of the second node.

According to the node provided in this embodiment of the present invention, control signaling including an indication identifier and resource indication information is received, and it is determined, according to the indication identifier, to receive data or send data on a resource indicated by the resource indication information. When there are multiple nodes that receive the control signaling, all the multiple nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Embodiment 4

In hardware implementation, the sending unit in Embodiment 3 may be a transmitter, the receiving unit may be a receiver, and the transmitter and the receiver may be integrated to form a transceiver.

The determining unit may be built in or independent of a processor of user equipment UE in a hardware form, or may be stored in a memory of the node 5 in a software form, so that the processor invokes and executes an operation corresponding to each of the foregoing modules. The processor may be a central processing unit (CPU), a microprocessor, a single-chip microcomputer, or the like.

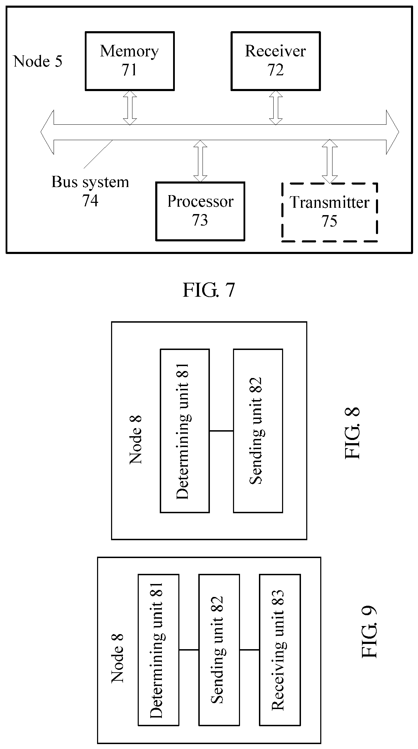

As shown in FIG. 7, a node 5 is provided in this embodiment of the present invention, and is applied to a device-to-device D2D communications system, where the D2D communications system further includes at least a second node. The node is used to execute the resource indication method shown in FIG. 1. The node 5 includes: a memory 71, a receiver 72, a processor 73, and a bus system 74.

The memory 71, the receiver 72, and the processor 73 are coupled together by using the bus system 74, where the bus system 74 may further include a power bus, a control bus, a status signal bus, and the like, in addition to a data bus. However, for clarity of description, various buses are marked as the bus system 74 in the figure.

The memory 71 is configured to store a set of code.

The code stored in the memory 71 is used to control the receiver 72 to receive control signaling sent by the second node, where the control signaling includes an indication identifier and resource indication information corresponding to the indication identifier, and the resource indication information is used to indicate a resource used when data is transmitted.

The code stored in the memory 71 is further used to control the processor 73 to determine, according to the indication identifier, to receive data or send data on the resource indicated by the resource indication information.

Optionally, the processor 73 is specifically configured to: determine whether the indication identifier is the same as an identifier of the node 5; and when the indication identifier is different from the identifier of the node 5, determine to receive data on the resource indicated by the resource indication information.

Optionally, the processor 73 is specifically configured to: determine whether the indication identifier is the same as an identifier of the node 5; and when the indication identifier is the same as the identifier of the node 5, determine to send data on the resource indicated by the resource indication information.

Optionally, the node 5 further includes a transmitter 75, configured to send a resource scheduling request message to the second node, where the resource scheduling request message is used to make the second node send the control signaling to the node 5.

The control signaling further includes a cluster identifier of a cluster in which the node 5 is located; and
the processor 73 is specifically configured to determine, according to the cluster identifier and the indication identifier, to receive data or send data on the resource indicated by the resource indication information.

Optionally, the indication identifier includes one of the following pieces of information: the indication identifier being a temporary identity ID of a device in the cluster, the indication identifier being a D2D ID of the device, the indication identifier being a temporary cell ID of the device, the indication identifier being an international mobile subscriber identification number IMSI of the device, the indication identifier being an international mobile equipment identity IME of the device, and the indication identifier being a subscriber identity module SIM number of the device.

The resource indication information includes: information indicating a frequency domain position in which the resource is located, and/or information indicating a time domain position in which the resource is located.

Optionally, the information indicating the frequency domain location in which the resource is located includes: information indicating a relative frequency domain position of the resource in a resource pool; and/or the information indicating the time domain position in which the resource is located includes: information indicating a relative time domain position of the resource in the resource pool; where the resource pool is constituted of a resource that can be allocated by the second node to the node 5.

Optionally, the receiver 72 is further configured to: receive a system message sent by the second node, where the system message includes information used to indicate the resource pool; or receive a broadcast message sent by the second node, where the broadcast message includes information used to indicate the resource pool; or receive semi-static signaling sent by the second node, where the semi-static signaling includes information used to indicate the resource pool.

Optionally, the receiver 72 is specifically configured to receive, in common search space of a physical control channel, the control signaling sent by the second node.

Exemplarily, the node 5 in this embodiment may be the "first node" described in the foregoing embodiment. In a scenario in which there is network coverage, the node 5 may be a base station or a terminal; in a scenario in which there is no network coverage, the node 5 may be a terminal. In addition, an "indication message" may be an identifier of a node 5, or may be an identifier of the second node.

According to the node provided in this embodiment of the present invention, control signaling including an indication identifier and resource indication information is received, and it is determined, according to the indication identifier, to receive data or send data on a resource indicated by the resource indication information. When there are multiple nodes that receive the control signaling, all the multiple nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Example 5

As shown in FIG. 8, a node 8 is provided in this example, and is applied to a device-to-device D2D communications system, where the D2D communications system further includes at least one first node. The node 8 is used to execute the resource indication method shown in FIG. 2. The node 8 includes:
a determining unit 81, configured to determine control signaling, where the control signaling includes an indication identifier and resource indication information, and the resource indication information is used to indicate a resource used when data is transmitted; and
a sending unit 82, configured to send the control signaling, where the control signaling is used to make a first node receiving the control signaling determine, according to the indication identifier, to receive data or send data on the resource indicated by the resource indication information.

Optionally, as shown in FIG. 9, the node 8 further includes:
a receiving unit 83, configured to receive a resource scheduling request message sent by a first node, where the resource scheduling request message is used to make the node 8 send the control signaling.

Optionally, the control signaling further includes a cluster identifier of a cluster in which the node 8 is located, and the cluster identifier is used to make a first node that is in the cluster corresponding to the cluster identifier and that receives the control signaling determine, according to an identifier of the transmit end, to receive data or send data on the resource indicated by the resource indication information.

Optionally, the resource indication information includes: information indicating a relative frequency domain position of the resource in a resource pool, and/or information indicating a relative time domain location of the resource in the resource pool, where the resource pool is constituted of a resource that can be allocated by the node 8 to the at least one first node.

Optionally, the sending unit 82 is further configured to: send a system message to the first node receiving the control signaling, where the system message includes information used to indicate the resource pool; or send a broadcast message to the first node receiving the control signaling, where the broadcast message includes information used to indicate the resource pool; or send semi-static signaling to the first node receiving the control signaling, where the semi-static signaling includes information used to indicate the resource pool.

Optionally, the sending unit 82 is specifically configured to send the control signaling in common search space of a physical control channel.

Exemplarily, the node 8 in this example may be the "second node" described in the foregoing example. In addition, an "indication message" may be an identifier of a first node, or may be an identifier of the node 8.

According to the node provided in this example, control signaling including an indication identifier and resource indication information is determined and sent, so that a first node receiving the control signaling determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Example 6

In hardware implementation, the sending unit in Example 5 may be a transmitter, the receiving unit may be a receiver, and the transmitter and the receiver may be integrated to form a transceiver.

The determining unit may be built in or independent of a processor of user equipment UE in a hardware form, or may be stored in a memory of the node 8 in a software form, so that the processor invokes and executes an operation corresponding to each of the foregoing modules. The processor may be a central processing unit (CPU), a microprocessor, a single-chip microcomputer, or the like.

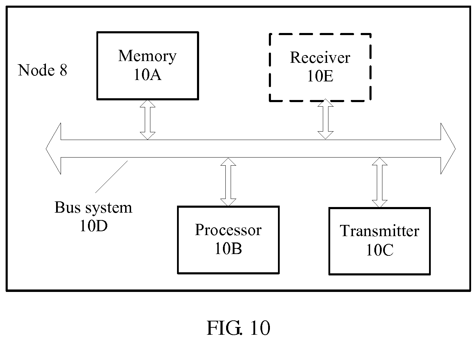

As shown in FIG. 10, a node 8 is provided in this example, and is applied to a device-to-device D2D communications system, where the D2D communications system further includes at least one first node. The node 8 is used to execute the resource indication method shown in FIG. 2. The node 8 includes: a memory 10A, a processor 10B, a transmitter 10C, and a bus system 10D.

The memory 10A, the processor 10B, and the transmitter 10C are coupled together by using the bus system 10D, where the bus system 10D may further include a power bus, a control bus, a status signal bus, and the like, in addition to a data bus. However, for clarity of description, various buses are marked as the bus system 10D in the figure.

The memory 10A is configured to store a set of code.

The code stored in the memory 10A is used to control the processor 10B to determine control signaling, where the control signaling includes an indication identifier and resource indication information, and the resource indication information is used to indicate a resource used when data is transmitted.

The code stored in the memory 10A is further used to control the transmitter 10C to send the control signaling, where the control signaling is used to make a first node receiving the control signaling determine, according to the indication identifier, to receive data or send data on the resource indicated by the resource indication information.

Optionally, the node 8 further includes:
a receiver 10E, configured to receive a resource scheduling request message sent by a first node, where the resource scheduling request message is used to make the node 8 send the control signaling.

Optionally, the control signaling further includes a cluster identifier of a cluster in which the node 8 is located, and the cluster identifier is used to make a first node that is in the cluster corresponding to the cluster identifier and that receives the control signaling determine, according to an identifier of the transmit end, to receive data or send data on the resource indicated by the resource indication information.

Optionally, the resource indication information includes: information indicating a relative frequency domain location of the resource in a resource pool, and/or information indicating a relative time domain location of the resource in the resource pool, where the resource pool is constituted of a resource that can be allocated by the node 8 to the at least one first node.

Optionally, the transmitter 10C is further configured to: send a system message to the first node receiving the control signaling, where the system message includes information used to indicate the resource pool; or send a broadcast message to the first node receiving the control signaling, where the broadcast message includes information used to indicate the resource pool; or send semi-static signaling to the first node receiving the control signaling, where the semi-static signaling includes information used to indicate the resource pool.

Optionally, the transmitter 10C is specifically configured to send the control signaling in common search space of a physical control channel.

Exemplarily, the node 8 in this example may be the "second node" described in the foregoing example. In addition, an "indication message" may be an identifier of a first node, or may be an identifier of the node 8.

According to the node provided in this example, control signaling including an indication identifier and resource indication information is determined and sent, so that a first node receiving the control signaling determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

### Example 7

This example further provides a device-to-device D2D communications system, including at least one first node and one second node.

The second node is any one of the nodes 8 provided in the foregoing Example 5 and Example 6, and is configured to determine and send control signaling, where the control signaling includes an indication identifier and resource indication information, the resource indication information is used to indicate a resource used when data is transmitted, and the control signaling is used to make a first node receiving the control signaling determine, according to the indication identifier, to receive data or send data on the resource indicated by the resource indication information.

The first node is any one of the nodes 5 provided in the foregoing Embodiment 3 and Embodiment 4, and is configured to: receive control signaling sent by the second node, where the control signaling includes an indication identifier and resource indication information corresponding to the indication identifier, and the resource indication information is used to indicate a resource used when data is transmitted; and determine, according to the indication identifier, to receive data or send data on the resource indicated by the resource indication information.

The D2D communications system provided in this example of the present invention includes at least one first node and one second node. The first node receives control signaling including an indication identifier and resource indication information, and determines, according to the indication identifier, to receive data or send data on a resource indicated by the resource indication information. When there are multiple first nodes that receive the control signaling, all the multiple first nodes can determine, by using the control signaling, to receive data or send data on the resource indicated by the resource indication information. Compared with the prior art in which extra control signaling is used to enable a receive end to learn a resource location, the solution can reduce overhead of the control signaling.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A resource indication method, applied to a device-to-device, D2D, communications system, wherein the D2D communications system comprises a first node and a second node, and the method comprises:
receiving (101), by the first node, control signaling sent by the second node, wherein the control signaling comprises an indication identifier and resource indication information corresponding to the indication identifier, and the resource indication information is used to indicate a resource used when data is transmitted, wherein the resource indication information comprises: information indicating a frequency domain position in which the resource is located, and/or information indicating a time domain position in which the resource is located; and
determining (102), by the first node according to the indication identifier and a cluster identifier of a cluster in which the second node is located, to receive the data or send the data on the resource indicated by the resource indication information;
wherein the control signaling further comprises the cluster identifier; and the determining, by the first node according to the indication identifier and the cluster identifier, to receive the data or send the data on the resource indicated by the resource indication information comprises:
when the cluster identifier in the control signaling is same as a cluster identifier of a cluster in which the first node is located, determining, by the first node according to the indication identifier, to receive the data or send the data on the resource indicated by the resource indication information.

2. The resource indication method according to claim 1, the method further comprising:
when the cluster identifier in the control signaling is different from the cluster identifier of the cluster in which the first node is located, determining, by the first node, that the control signaling cannot be obtained by parsing and therefore a resource allocated by the second node cannot be obtained.

3. The resource indication method according to claim 1 or 2, wherein the determining, by the first node according to the indication identifier, to receive the data or send the data on the resource indicated by the resource indication information comprises:
determining, by the first node, whether the indication identifier is the same as an identifier of the first node; and when the indication identifier is different from the identifier of the first node, determining to receive the data on the resource indicated by the resource indication information.

4. The resource indication method according to claim 1 or 2, wherein the determining, by the first node according to the indication identifier, to receive the data or send the data on the resource indicated by the resource indication information comprises:
determining, by the first node, whether the indication identifier is the same as an identifier of the first node; and when the indication identifier is the same as the identifier of the first node, determining to send the data on the resource indicated by the resource indication information.

5. The resource indication method according to any one of claims 1 to 4, wherein the indication identifier is an identifier of the first node or an identifier of the second node and comprises one of the following pieces of information: the indication identifier being a temporary identity, ID, of the first node or the second node, the indication identifier being a D2D ID of the first node or the second node, the indication identifier being a temporary cell ID of the first node or the second node, the indication identifier being an international mobile subscriber identification number, IMSI, of the first node or the second node, the indication identifier being an international mobile equipment identity, IME, of the first node or the second node, and the indication identifier being a subscriber identity module, SIM, number of the first node or the second node.

6. A node, applied to a device-to-device, D2D, communications system, wherein the D2D communications system further comprises a second node, and the node comprises:
a receiving unit (51), configured to receive control signaling sent by the second node, wherein the control signaling comprises an indication identifier and resource indication information corresponding to the indication identifier, and the resource indication information is used to indicate a resource used when data is transmitted, wherein the resource indication information comprises: information indicating a frequency domain position in which the resource is located, and/or information indicating a time domain position in which the resource is located; and
a determining unit (52), configured to determine, according to the indication identifier and a cluster identifier of a cluster in which the second node is located, to receive the data or send the data on the resource indicated by the resource indication information;
wherein the control signaling further comprises the cluster identifier; and the determining unit is configured to determine according to the indication identifier, to receive the data or send the data on the resource indicated by the resource indication information, when the cluster identifier in the control signaling is the same as a cluster identifier of a cluster in which the first node is located.

7. The node according to claim 6, the node further comprises:
means for determining that the control signaling cannot be obtained by parsing and therefore a resource allocated by the second node cannot be obtained, when the cluster identifier in the control signaling is different from the cluster identifier of the cluster in which the first node is located.

8. The node according to claim 6 or 7, wherein the determining unit is configured to: determine whether the indication identifier is the same as an identifier of the node; and when the indication identifier is different from the identifier of the node, determine to receive the data on the resource indicated by the resource indication information.

9. The node according to claim 6 or 7, wherein the determining unit is configured to: determine whether the indication identifier is the same as an identifier of the node; and when the indication identifier is the same as the identifier of the node, determine to send the data on the resource indicated by the resource indication information.

10. The node according to any one of claims 6 to 9, wherein the indication identifier is an identifier of the node or an identifier of the second node and comprises one of the following pieces of information: the indication identifier being a temporary identity, ID, of the node or the second node, the indication identifier being a D2D ID of the node or the second node, the indication identifier being a temporary cell ID of the node or the second node, the indication identifier being an international mobile subscriber identification number, IMSI, of the node or the second node, the indication identifier being an international mobile equipment identity, IME, of the node or the second node, and the indication identifier being a subscriber identity module, SIM, number of the node or the second node.

## Patentansprüche

1. Ressourcenanzeigeverfahren, angewandt auf Vorrichtung-zu-Vorrichtung-Kommunikationssysteme (D2D, Device-to-Device), wobei das D2D-Kommunikationssystem einen ersten Knoten und einen zweiten Knoten umfasst, und wobei das Verfahren Folgendes umfasst:
Empfangen (101), durch den ersten Knoten, von Steuersignalisierung, durch den zweiten Knoten gesendet, wobei die Steuersignalisierung eine Anzeigekennung und Ressourcenanzeigeinformationen entsprechend der Anzeigekennung umfasst, und wobei die Ressourcenanzeigeinformationen verwendet werden, um eine Ressource anzuzeigen, die verwendet wird, wenn Daten übertragen werden, wobei die Ressourcenanzeigeinformationen Folgendes umfassen: Informationen, eine Frequenzdomänenposition anzeigend, in der sich die Ressource befindet, und/oder Informationen, eine Zeitdomänenposition anzeigend, in der sich die Ressource befindet; und
Bestimmen (102), durch den ersten Knoten entsprechend der Anzeigekennung und einer Clusterkennung eines Clusters, in dem sich der zweite Knoten befindet, auf der durch die Ressourcenanzeigeinformationen angezeigten Ressource die Daten zu empfangen oder die Daten zu senden;
wobei die Steuersignalisierung ferner die Clusterkennung umfasst; und wobei das Bestimmen, durch den ersten Knoten entsprechend der Anzeigekennung und der Clusterkennung, auf der durch die Ressourcenanzeigeinformationen angezeigten Ressource die Daten zu empfangen oder die Daten zu senden, Folgendes umfasst:
wenn die Clusterkennung in der Steuersignalisierung die gleiche ist wie eine Clusterkennung eines Clusters, in dem sich der erste Knoten befindet, Bestimmen, durch den ersten Knoten entsprechend der Anzeigekennung, auf der durch die Ressourcenanzeigeinformationen angezeigten Ressource die Daten zu empfangen oder die Daten zu senden.

2. Ressourcenanzeigeverfahren nach Anspruch 1, wobei das Verfahren ferner Folgendes umfasst:
wenn sich die Clusterkennung in der Steuersignalisierung von der Clusterkennung des Clusters unterscheidet, in dem sich der erste Knoten befindet, Bestimmen, durch den ersten Knoten, dass die Steuersignalisierung nicht durch Parsen erhalten werden kann und dass daher eine durch den zweiten Knoten zugeordnete Ressource nicht erhalten werden kann.

3. Ressourcenanzeigeverfahren nach Anspruch 1 oder 2, wobei das Bestimmen, durch den ersten Knoten entsprechend der Anzeigekennung, auf der durch die Ressourcenanzeigeinformationen angezeigten Ressource die Daten zu empfangen oder die Daten zu senden, Folgendes umfasst:
Bestimmen, durch den ersten Knoten, ob die Anzeigekennung die gleiche ist wie eine Kennung des ersten Knotens; und wenn sich die Anzeigekennung von der Kennung des ersten Knotens unterscheidet, Bestimmen, die Daten auf der durch die Ressourcenanzeigeinformationen angezeigten Ressource zu empfangen.

4. Ressourcenanzeigeverfahren nach Anspruch 1 oder 2, wobei das Bestimmen, durch den ersten Knoten entsprechend der Anzeigekennung, auf der durch die Ressourcenanzeigeinformationen angezeigten Ressource die Daten zu empfangen oder die Daten zu senden, Folgendes umfasst:
Bestimmen, durch den ersten Knoten, ob die Anzeigekennung die gleiche ist wie eine Kennung des ersten Knotens; und wenn die Anzeigekennung die gleiche ist wie die Kennung des ersten Knotens, Bestimmen, die Daten auf der durch die Ressourcenanzeigeinformationen angezeigten Ressource zu senden.

5. Ressourcenanzeigeverfahren nach einem der Ansprüche 1 bis 4, wobei die Anzeigekennung eine Kennung des ersten Knotens oder eine Kennung des zweiten Knotens ist und eines der folgenden Stücke von Informationen umfasst: dass die Anzeigekennung eine temporäre Kennung (ID, Identity) des ersten Knotens oder des zweiten Knotens ist, die Anzeigekennung eine D2D-ID des ersten Knotens oder des zweiten Knotens ist, die Anzeigekennung eine temporäre Zellen-ID des ersten Knotens oder des zweiten Knotens ist, die Anzeigekennung eine internationale Mobilfunkteilnehmer-Kennnummer (IMSI, International Mobile Subscriber Identification Number) des ersten Knotens oder des zweiten Knotens ist, die Anzeigekennung eine internationale Mobilfunkgerätekennung (IME, International Mobile Equipment Identity) des ersten Knotens oder des zweiten Knotens ist, und die Anzeigekennung eine Teilnehmer-Identitätsmodulnummer (SIM, Subscriber Identity Module) des ersten Knotens oder des zweiten Knotens ist.

6. Knoten, angewandt auf Vorrichtung-zu-Vorrichtung-Kommunikationssysteme (D2D, Device-to-Device), wobei das D2D-Kommunikationssystem ferner einen zweiten Knoten umfasst, und wobei der Knoten Folgendes umfasst:
eine Empfangseinheit (51), dazu ausgelegt, Steuersignalisierung, durch den zweiten Knoten gesendet, zu empfangen, wobei die Steuersignalisierung eine Anzeigekennung und Ressourcenanzeigeinformationen entsprechend der Anzeigekennung umfasst, und wobei die Ressourcenanzeigeinformationen verwendet werden, um eine Ressource anzuzeigen, die verwendet wird, wenn Daten übertragen werden, wobei die Ressourcenanzeigeinformationen Folgendes umfassen: Informationen, eine Frequenzdomänenposition anzeigend, in der sich die Ressource befindet, und/oder Informationen, eine Zeitdomänenposition anzeigend, in der sich die Ressource befindet; und
eine Bestimmungseinheit (52), dazu ausgelegt, entsprechend der Anzeigekennung und einer Clusterkennung eines Clusters, in dem sich der zweite Knoten befindet, zu bestimmen, auf der durch die Ressourcenanzeigeinformationen angezeigten Ressource die Daten zu empfangen oder die Daten zu senden;
wobei die Steuersignalisierung ferner die Clusterkennung umfasst; und wobei die Bestimmungseinheit dazu ausgelegt ist, entsprechend der Anzeigekennung zu bestimmen, auf der durch die Ressourcenanzeigeinformationen angezeigten Ressource die Daten zu empfangen oder die Daten zu senden, wenn die Clusterkennung in der Steuersignalisierung die gleiche wie eine Clusterkennung eines Clusters ist, in dem sich der erste Knoten befindet.

7. Knoten nach Anspruch 6, wobei der Knoten ferner Folgendes umfasst:
Mittel zum Bestimmen, dass die Steuersignalisierung nicht durch Parsen erhalten werden kann und dass daher eine durch den zweiten Knoten zugeordnete Ressource nicht erhalten werden kann, wenn sich die Clusterkennung in der Steuersignalisierung von der Clusterkennung des Clusters unterscheidet, in dem sich der erste Knoten befindet.

8. Knoten nach Anspruch 6 oder 7, wobei die Bestimmungseinheit ausgelegt ist zum:
Bestimmen, ob die Anzeigekennung die gleiche ist wie eine Kennung des Knotens; und wenn sich die Anzeigekennung von der Kennung des Knotens unterscheidet, Bestimmen, die Daten auf der durch die Ressourcenanzeigeinformationen angezeigten Ressource zu empfangen.

9. Knoten nach Anspruch 6 oder 7, wobei die Bestimmungseinheit ausgelegt ist zum:
Bestimmen, ob die Anzeigekennung die gleiche ist wie eine Kennung des Knotens; und wenn die Anzeigekennung die gleiche ist wie die Kennung des Knotens, Bestimmen, die Daten auf der durch die Ressourcenanzeigeinformationen angezeigten Ressource zu senden.

10. Knoten nach einem der Ansprüche 6 bis 9, wobei die Anzeigekennung eine Kennung des Knotens oder eine Kennung des zweiten Knotens ist und eines der folgenden Stücke von Informationen umfasst: dass die Anzeigekennung eine temporäre Kennung (ID, Identity) des Knotens oder des zweiten Knotens ist, die Anzeigekennung eine D2D-ID des Knotens oder des zweiten Knotens ist, die Anzeigekennung eine temporäre Zellen-ID des Knotens oder des zweiten Knotens ist, die Anzeigekennung eine internationale Mobilfunkteilnehmer-Kennnummer (IMSI, International Mobile Subscriber Identification Number) des Knotens oder des zweiten Knotens ist, die Anzeigekennung eine internationale Mobilfunkgerätekennung (IME, International Mobile Equipment Identity) des Knotens oder des zweiten Knotens ist, und die Anzeigekennung eine Teilnehmer-Identitätsmodulnummer (SIM, Subscriber Identity Module) des Knotens oder des zweiten Knotens ist.

## Revendications

1. Procédé d'indication de ressource, appliqué à un système de communication de dispositif à dispositif, D2D, dans lequel le système de communication D2D comprend un premier noeud et un second noeud, et le procédé comprend de :
recevoir (101), par le premier noeud, une signalisation de commande envoyée par le second noeud, dans lequel la signalisation de commande comprend un identificateur d'indication et des informations d'indication de ressource correspondant à l'identificateur d'indication, et les informations d'indication de ressource sont utilisées pour indiquer une ressource utilisée lorsque des données sont transmises, dans lequel les informations d'indication de ressource comprennent : des informations indiquant une position de domaine fréquentiel dans laquelle se trouve la ressource, et/ou des informations indiquant une position de domaine temporel dans laquelle se trouve la ressource ; et
déterminer (102), par le premier noeud en fonction de l'identificateur d'indication et d'un identificateur de grappe d'une grappe dans laquelle se trouve le second noeud, de recevoir les données ou d'envoyer les données sur la ressource indiquée par les informations d'indication de ressource ;
dans lequel la signalisation de commande comprend en outre l'identificateur de grappe ; et la détermination, par le premier noeud en fonction de l'identificateur d'indication et de l'identificateur de grappe, de recevoir les données ou d'envoyer les données sur la ressource indiquée par les informations d'indication de ressource comprend de :
lorsque l'identificateur de grappe dans la signalisation de commande est identique à un identificateur de grappe d'une grappe dans laquelle se trouve le premier noeud, déterminer, par le premier noeud en fonction de l'identificateur d'indication, de recevoir les données ou d'envoyer les données sur la ressource indiquée par les informations d'indication de ressource.

2. Procédé d'indication de ressource selon la revendication 1, le procédé comprenant en outre de :
lorsque l'identificateur de grappe dans la signalisation de commande est différent de l'identificateur de grappe de la grappe dans laquelle se trouve le premier noeud, déterminer, par le premier noeud, que la signalisation de commande ne peut pas être obtenue par analyse et par conséquent une ressource allouée par le second noeud ne peut pas être obtenue.

3. Procédé d'indication de ressource selon la revendication 1 ou 2, dans lequel la détermination, par le premier noeud en fonction de l'identificateur d'indication, de recevoir les données ou d'envoyer les données sur la ressource indiquée par les informations d'indication de ressource comprend de :
déterminer, par le premier noeud, si l'identificateur d'indication est identique à un identificateur du premier noeud, et lorsque l'identificateur d'indication est différent de l'identificateur du premier noeud, déterminer de recevoir les données sur la ressource indiquée par les informations d'indication de ressource.

4. Procédé d'indication de ressource selon la revendication 1 ou 2, dans lequel la détermination, par le premier noeud en fonction de l'identificateur d'indication, de recevoir les données ou d'envoyer les données sur la ressource indiquée par les informations d'indication de ressource comprend de :
déterminer, par le premier noeud, si l'identificateur d'indication est identique à un identificateur du premier noeud, et lorsque l'identificateur d'indication est identique à l'identificateur du premier noeud, déterminer d'envoyer les données sur la ressource indiquée par les informations d'indication de ressource.

5. Procédé d'indication de ressource selon l'une quelconque des revendications 1 à 4, dans lequel l'identificateur d'indication est un identificateur du premier noeud ou un identificateur du second noeud et comprend l'une des informations suivantes : l'identificateur d'indication est une identité, ID, temporaire du premier noeud ou du second noeud, l'identificateur d'indication est une ID D2D du premier noeud ou du second noeud, l'identificateur d'indication est une ID de cellule temporaire du premier noeud ou du second noeud, l'identificateur d'indication est un numéro d'identité internationale d'abonné mobile, IMSI, du premier noeud ou du second noeud, l'identificateur d'indication est une identité internationale d'équipement mobile, IME, du premier noeud ou du second noeud, et l'identificateur d'indication est un numéro de module d'identité d'abonné, SIM, du premier noeud ou du second noeud.

6. Noeud, appliqué à un système de communication de dispositif à dispositif, D2D, dans lequel le système de communication D2D comprend en outre un second noeud, et le noeud comprend :
une unité de réception (51), configurée pour recevoir une signalisation de commande envoyée par le second noeud, dans lequel la signalisation de commande comprend un identificateur d'indication et des informations d'indication de ressource correspondant à l'identificateur d'indication, et les informations d'indication de ressource sont utilisées pour indiquer une ressource utilisée lorsque des données sont transmises, dans lequel les informations d'indication de ressource comprennent : des informations indiquant une position de domaine fréquentiel dans laquelle se trouve la ressource, et/ou des informations indiquant une position de domaine temporel dans laquelle se trouve la ressource ; et
une unité de détermination (52), configurée pour déterminer, en fonction de l'identificateur d'indication et d'un identificateur de grappe d'une grappe dans laquelle se trouve le second noeud, de recevoir les données ou d'envoyer les données sur la ressource indiquée par les informations d'indication de ressource ;
dans lequel la signalisation de commande comprend en outre l'identificateur de grappe ; et l'unité de détermination est configurée pour déterminer en fonction de l'identificateur d'indication, de recevoir les données ou d'envoyer les données sur la ressource indiquée par les informations d'indication de ressource, lorsque l'identificateur de grappe dans la signalisation de commande est identique à un identificateur de grappe d'une grappe dans laquelle se trouve le premier noeud.

7. Noeud selon la revendication 6, le noeud comprend en outre :
un moyen pour déterminer que la signalisation de commande ne peut pas être obtenue par analyse et par conséquent qu'une ressource allouée par le second noeud ne peut pas être obtenue lorsque l'identificateur de grappe dans la signalisation de commande est différent de l'identificateur de grappe de la grappe dans laquelle se trouve le premier noeud.

8. Noeud selon la revendication 6 ou 7, dans lequel l'unité de détermination est configurée pour : déterminer si l'identificateur d'indication est identique à un identificateur du noeud, et lorsque l'identificateur d'indication est différent de l'identificateur du noeud, déterminer de recevoir les données sur la ressource indiquée par les informations d'indication de ressource.

9. Noeud selon la revendication 6 ou 7, dans lequel l'unité de détermination est configurée pour : déterminer si l'identificateur d'indication est identique à un identificateur du noeud, et lorsque l'identificateur d'indication est identique à l'identificateur du noeud, déterminer d'envoyer les données sur la ressource indiquée par les informations d'indication de ressource.

10. Noeud selon l'une quelconque des revendications 6 à 9, dans lequel l'identificateur d'indication est un identificateur du noeud ou un identificateur du second noeud et comprend l'une des informations suivantes : l'identificateur d'indication est une identité, ID, temporaire du noeud ou du second noeud, l'identificateur d'indication est une ID D2D du noeud ou du second noeud, l'identificateur d'indication est une ID de cellule temporaire du noeud ou du second noeud, l'identificateur d'indication est un numéro d'identité internationale d'abonné mobile, IMSI, du noeud ou du second noeud, l'identificateur d'indication est une identité internationale d'équipement mobile, IME, du noeud ou du second noeud, et l'identificateur d'indication est un numéro de module d'identité d'abonné, SIM, du noeud ou du second noeud.
